# EUROPÄISCHE PATENTSCHRIFT

(11) **EP 2 229 539 B1**
(45) Veröffentlichungstag und Bekanntmachung des Hinweises auf die Patenterteilung: **07.11.2012**
(21) Anmeldenummer: 08870118.0
(22) Anmeldetag: 19.12.2008
(51) Int. Cl.: F16C 1/22, B60T 11/04

(54) **MONTAGEHILFE UND MONTAGEVERFAHREN**
MOUNTING AID AND MOUNTING METHOD
AUXILIAIRE DE MONTAGE ET PROCÉDÉ DE MONTAGE

(30) Priorität: 07.01.2008 DE 202008000220 U
(43) Veröffentlichungstag der Anmeldung: 22.09.2010
(73) Patentinhaber: AL-KO Kober AG, 89359 Kötz (DE)
(72) Erfinder: GEISLER, Hansjörg, A-6290 Mayrhofen (AT)
(74) Vertreter: Ernicke, Hans-Dieter
(86) Internationale Anmeldenummer: PCT/EP2008/010884
(87) Internationale Veröffentlichungsnummer: WO 2009/086897

(56) Entgegenhaltungen:
- DE-A1- 19 618 422
- DE-A1- 19 618 423
- FR-A- 2 710 302

## Beschreibung

Die Erfindung betrifft eine Montagehilfe für eine Seilzugeinstellung bzw. eine mit einer solchen Seilzugeinstellung ausgerüstete Bremseinrichtung sowie eine Montageverfahren mit den Merkmalen im Oberbegriff des Verfahrens- und Vorrichtungshauptanspruchs.

In der Praxis ist es bekannt, Bremseinrichtungen, insbesondere Handbremseinrichtungen für Fahrzeuge mit einer Seilzugeinstellung auszurüsten, die den an den Radbremsen und in den Seilzügen auftretenden Verschleiß automatisch kompensiert. Für die Montage der Bremseinrichtung und insbesondere für das Einhängen der Bremszüge oder Seilzüge besteht das Problem einer temporären Überbrückung oder Entlastung der Seilzugeinstellung. Hierfür ist es aus der Praxis bekannt, ein zur Seilzugeinstellung gehöriges und mit den Seilzügen verbundenes Zugelement in einer Überbrückungsposition durch eine gehäusefeste Absteckung oder dergleichen zu arretieren, die nach der Montage wieder entfernt wird. Nach der Montage müssen ferner die Bremseinrichtung und die Seilzüge wieder gespannt und eingestellt werden. Beides bedingt eine entsprechende Zugänglichkeit der Absteckung und der hierdurch gebildeten Montagehilfe.

Die DE 196 18 423 A1 befasst sich mit einer Vorrichtung zur selbsttätigen Längenkorrektur von Seilzügen, die ohne Federvorspannung des Seilzugs auskommen soll. Hierzu ist ein Seilzugabschnitt mit einer Zahnstange verbunden, die ihrerseits mit einer Mitnahmeeinrichtung in Eingriff steht, welche über einen zweiten Seilzugabschnitt mit einem Geber, z.B. einem Handbremshebel, verbunden ist. Die Zahnstange steht mit gezahnten Mitnehmerhebeln an der Mitnahmeeinrichtung im Eingriff, die bei Auftreten von Verschleiss an einem ortsfesten Anschlag gedreht werden und hierdurch den Seilzug nachspannen.

Andere und mit Federn belastete Seilzugnachstellungen sind aus der DE 196 18 422 A1 und FR 2 710 302 A1 bekannt.

Es ist Aufgabe der vorliegenden Erfindung, eine bessere Technik aufzuzeigen.

Die Erfindung löst diese Aufgabe mit den Merkmalen im Verfahrens- und Vorrichtungshauptanspruch.
Die beanspruchte Montagehilfe und das Montagerverfahren haben den Vorteil, dass die Montagehilfe nach der Montage leicht und einfach gelöst werden kann und im weiteren Betrieb nicht stört. Die Montagehilfe braucht zum Lösen nicht von außen zugänglich zu sein und verlangt auch keinen Werkzeugeinsatz. Die Montagehilfe kann durch ein Bedienen eines Betätigungsorgans, insbesondere eines Handbremshebels, selbsttätig und zuverlässig gelöst werden. Alternativ ist ein Lösen der Montagehilfe durch eine Zugbewegung direkt am Zugelement oder mittelbar am Seilzug bzw. einem Übertragungselement möglich. Diese Technik ist einfach und bedienungsfreundlich und vermeidet Fehlbedienungen.

Die Seilzugeinstellung kann durch die Montagehilfe in sich arretiert werden und erhält dadurch eine feste Länge zwischen ihren Verbindungs- und Montagestellen zu einem Betätigungsorgan und zu einem Seilzug. Eine Verbindung der Seilzugeinstellung zu einer externen Abstützung oder Absteckung, z.B. einem Gestell oder Gehäuse einer Handbremseinrichtung, ist nicht erforderlich. Durch Lösen der Montagehilfe kann die Abstandsfixierung aufgehoben und die Spann- und Nachstellfunktion der Seilzugeinstellung aktiviert werden.

Die Montagetechnik hat ferner den Vorteil, dass das Betätigungsorgan für die Montage in eine beliebig geeignete Montagestellung gebracht und erst nach erfolgter Montage in der vorerwähnten Weise zum Lösen der Montagehilfe bedient werden kann. Mit dem Lösen der Montagehilfe kann auch die überbrückte oder entlastete Seilzugeinstellung in Funktion treten und für ein Straffen der Seilzüge und eine Ersteinstellung der Bremseinrichtung sorgen.

Die Montagehilfe kann eine vorgespannte Schnappverbindung zum Arretieren des teilweise gespannten Spannelements aufweisen, die sich selbsttätig öffnen und zurückfedern kann, wenn das Spannelement über das Betätigungsorgan und/oder das Zugelement noch ein Stück weiter gespannt wird. Der zusätzliche Spannweg kann sehr klein sein. Eine Leiteinrichtung kann das Öffnen der Schnappverbindung unterstützen und kann außerdem dafür sorgen, dass die Schnappverbindung und die hierdurch gebildete Arretierung im weiteren Betrieb nicht in unerwünschter Weise von selbst erneut einrasten. Auch zum Lösen dieser Schnappverbindung sind weder eine Zugänglichkeit der Montagehilfe, noch ein Werkzeugeinsatz erforderlich. Alternativ zur Schnappverbindung mit der Leiteinrichtung kann die Montagehilfe eine mechanische Zwangsführung zum Lösen der Arretierung aufweisen. Die Montagehilfe lässt sich bei Bedarf, z.B. für Wartungszwecke, wieder bewusst arretieren.

Günstig sind ferner Massnahmen zum Lösen der Mitnahmeeinrichtung, um das Öffnen der Montagehilfe zu erleichtern. Besonders vorteilhaft ist dabei eine Abstimmung des Rastgesperres, insbesondere die Anordnung eines unprofilierten Bereichs am Zugelement in der Spann - und Montagestellung. Dies erhöht die Zuverlässigkeit beim Öffnen der Montagehilfe und bietet eine Unabhängigkeit von Längentoleranzen und Längenabstimmungen der Seilzüge sowie von der Stellung des Betätigungsorgans.

Die beanspruchte Montagehilfe lässt sich in unterschiedlichsten Arten von Bremseinrichtungen und Seilzugeinstellungen einsetzen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine perspektivische Darstellung einer Seilzugeinstellung mit einer Montagehilfe und weiteren Bestandteilen einer Bremseinrichtung,
- Figur 2:: eine Draufsicht auf die Anordnung von Figur 1,
- Figur 3:: eine geklappte Seitenansicht der Anordnung von Figur 2 mit einem angedeuteten Handbremshebel,
- Figur 4:: eine vergrößerte und abgebrochene Detailansicht der Montagehilfe und der Seilzugeinstellung in perspektivischer Ansicht entsprechend Figur 1,
- Figur 5:: eine vergrößerte abgebrochene und teilweise geschnittene Seitenansicht der Seilzugeinstellung und der Montagehilfe gemäß Figur 2,
- Figur 6:: eine vergrößerte und abgebrochene Detailansicht der Seilzugeinstellung und der Montagehilfe von Figur 3,
- Figur 7 bis 9:: verschiedene Ansichten eines Sicherungsbügels der Montagehilfe und
- Figur 10 bis 13:: verschiedene und teilweise geschnittene Ansichten einer Federabstützung.

Die Erfindung betrifft eine Montagehilfe (2) für eine Seilzugeinstellung (1) sowie eine zugehörige Bremseinrichtung (3). Die Erfindung betrifft ferner die mit einer Montagehilfe (2) ausgerüstete Seilzugeinstellung (1) und auch eine Bremseinrichtung (3), welche eine Montagehilfe (2) und eine Seilzugeinstellung (1) aufweist. Die Erfindung befasst sich ferner mit einem Montageverfahren.

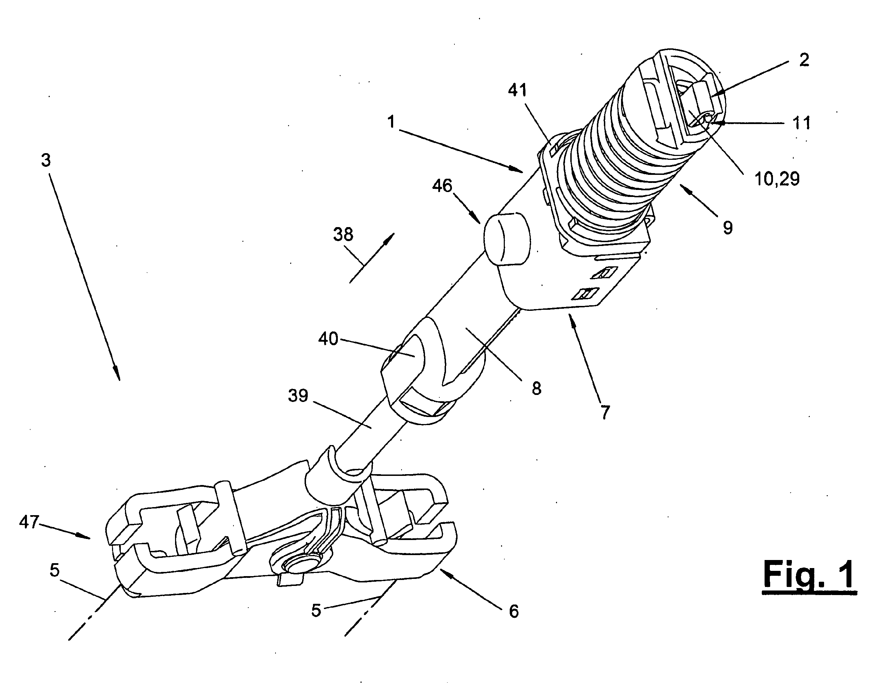

In Figur 1 bis 3 sind eine Seilzugeinstellung (1) und eine Montagehilfe (2) in verschiedenen Ansichten und in Verbindung mit anderen Komponenten einer Bremseinrichtung (3) dargestellt. Die Bremseinrichtung (3) ist für ein Fahrzeug, insbesondere einen PKW oder LKW vorgesehen. Sie kann z.B. als Handbremseinrichtung und dabei insbesondere als Feststellbremse ausgebildet sein. Es kann sich alternativ um eine Betriebsbremse handeln.

Die Bremseinrichtung (3) besitzt ein oder mehrere Seilzüge oder Bremszüge (5), die mit ein oder mehreren Radbremsen (nicht dargestellt) direkt oder indirekt verbunden sind. Die in den Zeichnungen nur durch ihre Achsen schematisch angedeuteten Seilzüge (5) sind im gezeigten Ausführungsbeispiel doppelt vorhanden und mit einem Ausgleichselement (6) verbunden, welches z.B. als Waagbalken ausgebildet ist. Der Waagbalken (6) ist über ein erstes Gelenk schwenkbar mit einem Verbindungsglied (39), z.B. einer Verbindungsstange, verbunden, die wiederum über ein zweites Gelenk (40) mit einem Zugelement (8) der Seilzugeinstellung (1) verbunden ist. Alternativ kann nur ein einzelner Seilzug (5) vorhanden und direkt mit dem Zugelement (8) verbunden sein.

Das Zugelement (8) kann einer beliebige geeignete Ausbildung haben. Es kann z.B. eine flache Zugstange mit einem hammerkopfartigen Querschnitt und mit einer Verzahnung, einem Wellenprofil oder dgl. anderer Konturierung an ein oder mehreren Seiten sein. Die Zugstange kann alternativ einen zylindrischen, ovalen oder in sonstiger Weise geformten Querschnitt haben.

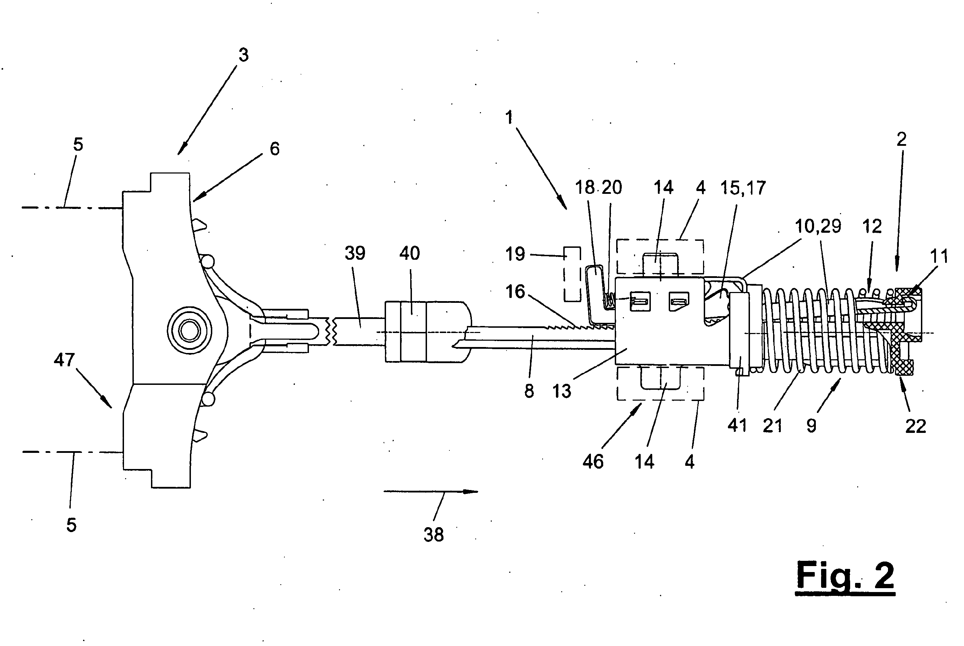

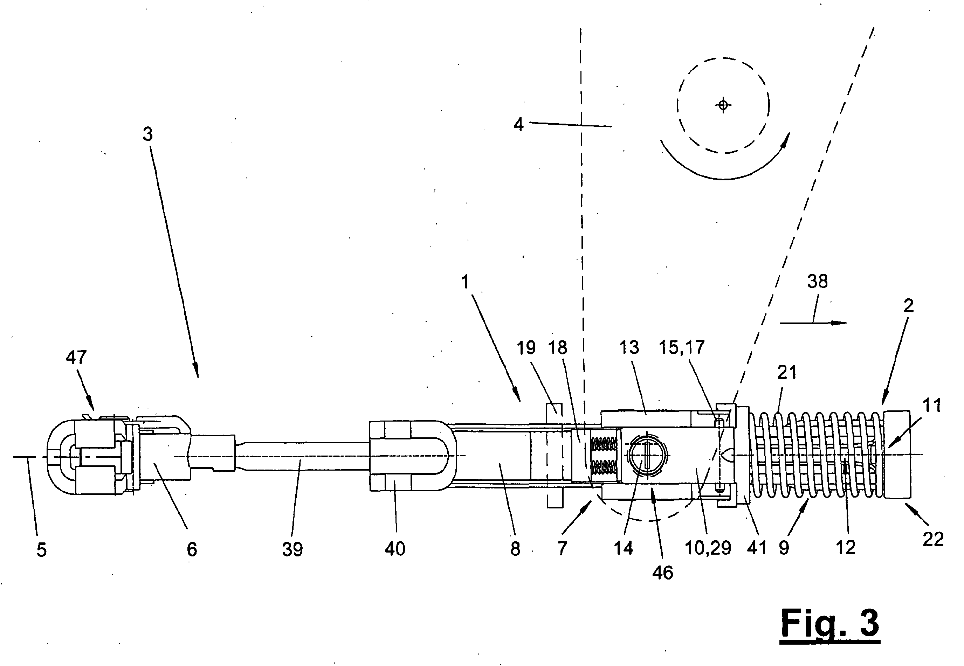

Zur Bremseinrichtung (3) gehört ferner mindestens ein bewegliches Betätigungsorgan (4), welches z.B. als drehbarer Handbremshebel ausgebildet ist und in Figur 2 und 3 schematisch dargestellt ist. Das Betätigungsorgan (4) kann alternativ ein Pedal oder Fußbremshebel oder ein sonstiges Betätigungs- oder Stellelement sein. Wenn der Hand- oder Fußbremshebel (4) um sein Drehlager in der in Figur 3 durch den Pfeil angedeuteten Weise gedreht wird, werden die Seilzüge (5) in Anzugrichtung (38) gespannt.

Das Betätigungsorgan (4) wirkt auf das Zugelement (8) über eine Mitnahmeeinrichtung (7) und ein Spannelement (9) ein. Zwischen der Mitnahmeeinrichtung (7) und dem Zugelement (8) kann eine lösbare Verbindung bestehen. Zwischen dem Spannelement (9) und dem Zugelement (8) besteht ebenfalls eine Verbindung, die vorzugsweise dauerhaft ist. Bei gelöster Mitnahmeeinrichtung (7) zieht das Spannelement (9) das Zugelement (8) an und strafft dadurch die Seilzüge (5), wobei etwaige Längungen in den Seilzügen (5) oder Verschleiß an den Radbremsen oder dergleichen andere äußere Einwirkungen kompensiert werden können. Diese Kompensation ist durch die gelöste Mitnahmeeinrichtung (7) reversibel.

Die Mitnahmeeinrichtung (7) und das Spannelement (9) können in beliebig geeigneter Weise ausgebildet sein. Das Spannelement (9) kann mit der Mitnahmeeinrichtung (7) verbunden und an dieser abgestützt sein. Das Spannelement (9) kann dabei in Anzugrichtung (38) vor der Mitnahmeeinrichtung (7) angeordnet sein. Alternativ kann das Spannelement (9) in Anzugrichtung (38) hinter der Mitnahmeeinrichtung (7) angeordnet sein. Es kann ferner am Betätigungsorgan (4) oder an anderer Stelle, z.B. an einem ortsfesten Anschlag oder dergleichen abgestützt sein. Die Mitnahmeeinrichtung (7) und das Spannelement (9) bilden zusammen die besagte Seilzugeinstellung (1). Diese kann z.B. gemäß der DE 20 2004 005 247 U1 oder in anderer geeigneter Weise ausgebildet sein.

Für die Montage der Seilzugeinstellung (1) und ggf. auch der Seilzüge (5) und der anderen Teile der Bremseinrichtung (3) kommt eine Montagehilfe (2) zum Einsatz. Mit der Montagehilfe (2) kann die Seilzugeinstellung (1) temporär überbrückt oder entlastet werden. Die Seilzugeinstellung (1) befindet sich zwischen dem Betätigungsorgan (4) und den Seilzügen (5) und stellt zwischen diesen eine einstellbare und spannbare Verbindung her. Die Seilzugeinstellung (1) hat hierfür einerseits eine Verbindungsstelle (46) zum Betätigungsorgan (4), die z.B. in der nachfolgend erläuterten Weise von einem Lager (14) eines Klemmgehäuses (13) gebildet wird und andererseits eine Verbindungsstelle (47) zu den Seilzügen (5), die z.B. durch die Anbindung des Ausgleichselements (6) am Zugelement (8) oder durch eine direkte Verbindung eines Seilzugs (5) mit dem Zugelement (8) gebildet wird. Die Seilzugeinstellung (1) definiert den Abstand zwischen diesen beiden Verbindungsstellen (46,47) und kann diesen bei Bedarf unter Einwirkung des Spannelements (9) auch verändern, insbesondere verkürzen, um die Seilzüge (5) entsprechend nachzuspannen und Spiel in den Seilzügen (5) oder in anderen Bereichen der Bremseinrichtung (3), z.B. in den Radbremsen, aufzunehmen.

Bei der Montage wird die Seilzugeinstellung (1) mit dem Betätigungsorgan (4) und den ein oder mehreren Seilzügen (5) an den besagten Verbindungsstellen (46,47) verbunden. Hierfür ist es günstig, wenn der Abstand zwischen diesen Verbindungsstellen (46,47) an der Seilzugeinstellung (1) fixiert ist und das Spannelement (9) hierfür deaktiviert oder blockiert ist, wobei der feste Abstand für die Dauer der Montage aufrecht erhalten wird. Die temporär überbrückte oder entlastete Seilzugeinstellung (1) kann bei der Montage wie eine starre Verbindungsstange gehandhabt werden. Es ist ferner günstig, wenn dieser Abstand größer als im normalen Fahr- und Bremsbetrieb ist. Diesem Zweck dient die Montagehilfe (2), welche für die besagte Überbrückung oder Entlastung der Seilzugeinstellung (1) und ihrer Spannfunktion sorgt.

Die Montagehilfe (2) wirkt mit der Seilzugeinstellung (1) zusammen und kann diese in einer montagegünstigen Stellung mit einem ausreichend großen Abstand der Verbindungsstellen (46,47) arretieren. Hierzu weist die Montagehilfe (2) ein Sicherungselement (10) auf, welches auf das Spannelement (9) einwirkt und dieses in einer teilweise gespannten Stellung lösbar arretiert. Hierdurch ist auch das mit dem Spannelement (9) verbundene Zugelement (8) arretiert. Es wird dabei so weit aus der Seilzugeinstellung (1) bzw. der Mitnahmeeinrichtung (7) zum Ausgleichselement (6) hin ausgeschoben, dass die Seilzüge (5) problemlos eingehängt werden können. Das Einhängen der Seilzüge (5) kann am Ausgleichselement (6) und/oder an den Radbremsen erfolgen.

Nach erfolgter Montage kann die Montagehilfe (2) gelöst und die arretierte Seilzugeinstellung (1) wieder freigegeben werden. Dies kann durch eine Spann- oder Anziehbewegung des Betätigungsorgans (4) in Anzugrichtung (38) und/oder eine Rückziehbewegung des Zugelements (8), z.B. durch Ziehen am Seilzug (5) oder am Ausgleichselement (6) in Gegenrichtung erfolgen, wobei die Freigabe der Arretierung selbsttätig geschieht. In allen Bewegungsfällen wird das zunächst teilweise gespannte Spannelement (9) noch weiter gespannt, wodurch die Arretierung entlastet wird und sich lösen kann. Die Mitnahmeeinrichtung (7) ist hierfür gelöst oder zumindest begrenzt beweglich und erlaubt eine Relativbewegung zwischen dem Betätigungsorgan (4) und dem Zugelement (8). Dies kann insbesondere eine Relativbewegung des Klemmgehäuses (13) gegenüber dem vom Seilzug (5) festgehaltenen Zugelement (8) sein.

Ein Lösen der Mitnahmeeinrichtung (7) ist auf verschiedene Weise möglich. Zum einen kann das Betätigungsorgan (4), z.B. der Handbremshebel, in die Lösestellung oder 0-Stellung gebracht werden, wodurch in der nachfolgend erläuterten Weise die Mitnahmeeinrichtung (7) geöffnet wird. Aus dieser Stellung heraus kann das Betätigungsorgan (4) angezogen werden, wobei das Spannelement (9) gespannt und die Montagehilfe (2) gelöst wird, bevor die Mitnahmeeinrichtung (7) wieder einrastet und eine feste Verbindung zwischen dem Zugelement (8) und dem Betätigungsorgan (4) herstellt. Alternativ oder zusätzlich kann in der besagten Lösestellung oder 0-Stellung ein Seilzug (5) oder das Ausgleichselement (6) nach hinten gegen die Anzugrichtung (38) gezogen werden, wobei das Zugelement (8) mitbewegt wird und das an der Mitnahmeeinrichtung (7) abgestützte Spannelement (9) spannt. Alternativ kann auch direkt am Zugelement (8) gezogen werden. In allen Fällen findet eine Relativbewegung zwischen dem Zugelement (8) und dem vom Betätigungsorgan (4) bewegten Teil der Mitnahmeeinrichtung (7), z.B. dem nachstehend erläuterten Klemmgehäuse (13), statt, mit der das Spannelement (9) komprimiert wird und zum Auslösen der Montagehilfe (2) führt.

Für das schnelle und einfache Lösen der Montagehilfe (2) ist es günstig, die Arretierung als eine vorgespannte Schnappverbindung (11) auszubilden und diese zwischen dem Sicherungselement (10) und dem Spannelement (9) anzuordnen. Durch die gegenseitige Relativbewegung des Sicherungselements (10) und des Spannelements (9) rastet die Schnappverbindung (11) aus, wobei das vorgespannte Sicherungselement (10) zurückfedert und eine arretierfreie Ruhelage einnimmt, die den weiteren Betrieb der Seilzugeinstellung (1) und der Bremseinrichtung (3) nicht stört. Das aus der Arretierung befreite Spannelement (9) kann sich entspannen und nimmt dabei das Zugelement (8) mit, wodurch die Seilzüge (5) angespannt und in eine Ausgangsposition eingestellt werden.

Alternativ kann statt der Schnappverbindung (11) eine mechanische Zwangsführung vorhanden sein, um bei der Relativbewegung die Arretierung zu lösen und das Sicherungselement (10) vom Spannelement (9) zu entfernen und in eine arretierfreie Ruhelage zu bringen.

Die Montagehilfe (2) wird für die Anfangsmontage des Betätigungsorgans (4) im Fahrzeug benutzt. Hierbei können die Seilzugeinstellung (1) und deren Mitnahmeeinrichtung (7) derart überbrückt sein, dass das Betätigungsorgan (4) in eine montagegünstige Stellung, z.B. in eine Schräglage oder in eine aufrechte Lage, gebracht werden kann. Das Betätigungsorgan (4) kann auch eine abgeschwenkte Ruhestellung einnehmen. Das Zugelement (8) ist nach hinten ausgeschoben und sein Eingriff mit der Mitnahmeeinrichtung (7) ist gelöst. Nach erfolgter Montage des Betätigungsorgans (4) und seiner weiteren Komponenten, z.B. eines Gestells mit Rasteinrichtung, einer unterstützenden Gasfeder oder dgl., wird z.B. das Betätigungsorgan (4) über die Montagestellung hinaus bewegt, wobei das Spannelement (9) in Anzugsrichtung (38) noch weiter gespannt wird und die Arretierung oder die Schnappverbindung (11) sich in der vorerwähnten Weise lösen kann. Anschließend wird das Betätigungsorgan (4) wieder in die Ruhestellung zurückbewegt.

Die Montagehilfe (2) kann ferner eine Leiteinrichtung (12) zum Führen des Sicherungselements (10) beim Lösen der Arretierung oder der Schnappverbindung (11) aufweisen. Die Leiteinrichtung (12) kann auch als Sicherung gegen ein unerwünschtes erneutes Einrasten der Arretierung oder der Schnappverbindung (11) dienen und entsprechend ausgebildet sein. Sie kann ferner ein Bestandteil der vorerwähnten Zwangsführung sein. Alternativ kann bei ausreichender Rückschnappfunktion auf die Leiteinrichtung (12) verzichtet werden.

Die Leiteinrichtung (12) kann das Sicherungselement (10) in eine neutrale Stellung bringen, in der es den Betrieb der Seilzugeinstellung (1) und der Bremseinrichtung (3) nicht stört, keine bremsenden Reibkräfte entwickelt und auch nicht mehr in sperrenden Eingriff mit dem Spannelement (9) tritt.

Das Sicherungselement (10) ist in der gezeigten Ausführungsform mit der Mitnahmeeinrichtung (7) verbunden. Es kann alternativ oder zusätzlich direkt mit dem Betätigungsorgan (4) verbunden sein. Für die Schaffung der vorgespannten Schnappverbindung (11) ist es günstig, wenn das Sicherungselement (10) zumindest bereichsweise biegeelastisch ausgebildet ist. Dies ermöglicht ein Rückschnappen des Sicherungselements (10) in die besagte neutrale Lage nach Lösen der Arretierung oder der Schnappverbindung (21). Diese Rückbewegung kann alternativ oder zusätzlich durch die Leiteinrichtung (12) unterstützt werden. In Abwandlung der gezeigten Ausführungsform kann die Arretierung nur durch die Leiteinrichtung (12) gelöst werden, wobei auf eine federnd vorgespannte Schnappverbindung (11) verzichtet werden kann.

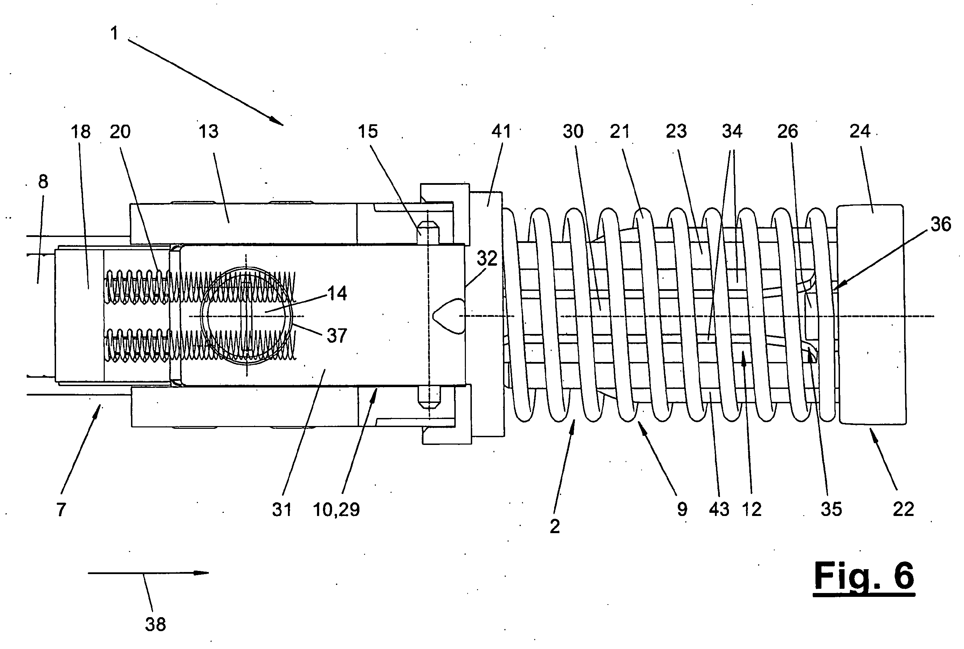

Figur 1 bis 13 geben ein konstruktives Ausführungsbeispiel für die Ausgestaltung der Seilzugeinstellung (1), der Montagehilfe (2) und der Mitnahmeeinrichtung (7) in Verbindung mit einer Handbremseinrichtung (3) eines Fahrzeugs wieder. Die Seilzugeinstellung (1) und die Mitnahmeeinrichtung (7) können dabei entsprechend der DE 20 2004 005 247 U1 ausgebildet sein.

Die Mitnahmeeinrichtung (7) besitzt ein hohles Klemmgehäuse (13) mit einem darin in Auszugsrichtung (38) und quer dazu beweglich geführten Klemmstück (15) mit einer Keilführung (17). Das stangenförmige Zugelement (8) ragt durch das Klemmgehäuse (13) und ist darin formschlüssig und in Längsrichtung beweglich geführt. Das Zugelement (8) wirkt mit dem Klemmstück (15) über ein lösbares Rastgesperre (16) zusammen. Das Rastgesperre (16) wird z.B. aus Zahnleisten, Wellenprofilen oder dgl. an der Zugstange (8) und der zugewandten Seite des Klemmstücks (15) gebildet.

Das Klemmgehäuse (13) ist über ein Lager (14), z.B. zwei seitlich abstehende Lagerbolzen, beidseits mit den Armen des Handbremshebels (4) verbunden. Das Klemmgehäuse (13) kann zwischen diesen Armen aufgenommen sein. Drehbewegungen des Handbremshebels (4) werden in eine Mitnahmebewegung des Klemmgehäuses (13) in Auszugsrichtung (38) umgesetzt. Hierbei wird das Klemmstück (15) über die Keilführung (17) an das Zugelement (8) angenähert und dabei das Rastgesperre (16) geschlossen. Dies bewirkt eine Mitnahme des Zugelements (8) in Anzugrichtung (38).

Das Klemmstück (15) ragt an der Rückseite aus dem Klemmgehäuse (13) und ist dort mit einem wegragenden Ansatz (18) versehen, auf den ein oder mehrere Federn (20) einwirken, die am Klemmgehäuse (13) abgestützt sind. Durch diese Federkraft wird das Klemmstück (15) gegen die Auszugrichtung (38) bewegt, wodurch der keilförmige verdickte Kopf des Klemmstücks (15) mit einer Keilfläche am Klemmgehäuse (13) in Eingriff gelangen und die hierdurch gebildete Keilführung (17) das Klemmstück (15) zur Zugstange (8) hin drückt. In Ruhestellung des Betätigungsorgans (4) werden dieser Mitnahmeeingriff und das Rastgesperre (16) gelöst, indem der Ansatz (18) an einem relativ ortsfesten Anschlag (19) anschlägt und das Klemmstück (15) in Auszugrichtung (38) vorgeschoben und unter Lösen der Keilverbindung (17) vom Zugelement (8) weg bewegt wird. In dieser Lösestellung wirkt das Spannelement (9) auf das Zugelement (8) ein und kann dieses unter Kompensation von Bremsverschleiß, Seilzugdehnungen oder dergleichen, anziehen.

Die Lage und Länge des Rastgesperres (16) kann definiert und auf die Montagebedürfnisse abgestimmt sein. Insbesondere am Zugelement (8) kann die Erstreckung der Zahnleiste oder des Wellenprofils nach vorn in Auszugsrichtung (38) begrenzt sein, wobei das Zugelement (8) anschließend einen neutralen und z.B. im wesentlichen glatten oder nicht profilierten Bereich aufweist. In der teilweise gespannten Entlastungs- oder Überbrücküngsstellung des Spannelements (9) ist das Zugelement (8) gegen die Auszugsrichtung (38) nach hinten ausgeschoben, wobei dieser neutrale oder unprofilierte Bereich an das Klemmstück (15) gelangt und ein Schließen des Rastgesperres (16) verhindert. In dieser Stellung kann das Betätigungsorgan (4) in eine montagegünstige Position gebracht werden, ohne dass durch diese Bewegung ein Schließen des Rastgesperres (16) stattfindet.

Der unprofilierte Bereich erleichtert außerdem das vorerwähnte weitere Spannen des Spannelements (9) bei eingehängten Seilzügen (5) und auf Block gezogenen Radbremsen, die in dieser Stellung gemeinsam eine Weiterbewegung des Zugelements (8) in Auszugsrichtung (38) begrenzen und die notwendige Abstützung für das weitere Spannen des Spannelements (9) bieten. Bei dieser weiteren Spannbewegung kann sich die Mitnahmeeinrichtung (7) mit dem Klemmstück (15) gegenüber dem Zugelement (8) ohne rastenden Eingriff bewegen. Erst nach Lösen der Montagehilfe (2) und Zurückbewegung des Betätigungsorgans (4) in die Ruhestellung werden die Zahnleisten, Wellenprofile oder dergleichen von der Zugstange (8) und des Klemmstücks (15) in eine eingriffsgünstige Relativposition gebracht.

Bei Einsatz einer solchen Abstimmung des Rastgesperres (16) und insbesondere eines neutralen Bereichs am Zugelement (8) kann ein Lösen der Montagehilfe (2) durch Anziehen des Betätigungsorgans (4) und/oder Anziehen des Zugelements (8) direkt aus der Montagestellung des Betätigungsorgans (4) heraus erfolgen. Ein Rückbewegen in dessen Lösestellung oder 0-Stellung ist nicht erforderlich. Es ist außerdem unerheblich, ob die Seilzüge (5) Längentoleranzen haben.

Alternativ kann das Rastgesperre (16) sich bis zum vorderen Ende des Zugelements (8) erstrecken. Bei einem in Ruhestellung befindlichen Betätigungsorgan (4) ist das Rastgesperre (16) geöffnet. Bei eingehängten und blockierten Seilzügen (5) genügt ein sehr kurzer Spannweg der Mitnahmeeinrichtung (7) und des Spannelements (9) durch die eingangs erwähnte Anziehbewegung des Betätigungsorgans (4) und/oder des Zugelements (8). Der Spannweg ist kürzer als der Zustellweg für das Klemmstück (15) zum Schließen des Rastgesperres (16), so dass auch bei dieser Variante ein sicheres Lösen der Arretierung gegeben ist.

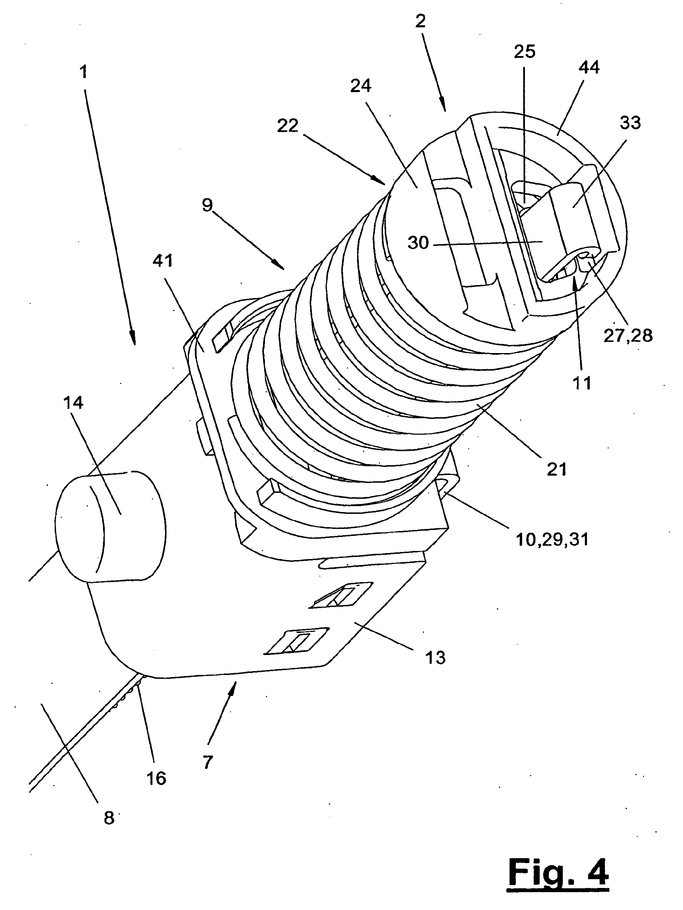

Das Spannelement (9) weist in der gezeigten Ausführungsform eine hohle Spannfeder (21) auf, die z.B. als zylindrische Schraubendruckfeder ausgebildet und in Anzugsrichtung (38) vor der Mitnahmeeinrichtung (7) angeordnet ist. Diese Spannfeder (21) stützt sich rückseitig am Klemmgehäuse (13) ab. Hierfür kann an der Stirnseite des Klemmgehäuses (13) eine geeignete Federaufnahme (41) mit einem ringförmigen Führungskranz gemäß Figur 1 und 4 vorhanden sein. Die Federaufnahme (41) kann einen Freiraum für den Durchlass des Sicherungselements (10) aufweisen. Sie kann alternativ mit dem Sicherungselement (10) verbunden sein und dessen Bestandteil bilden. Die Federaufnahme (41) kann seitliche Wangen zur formschlüssigen Führung und Abstützung am Klemmgehäuse (13) aufweisen.

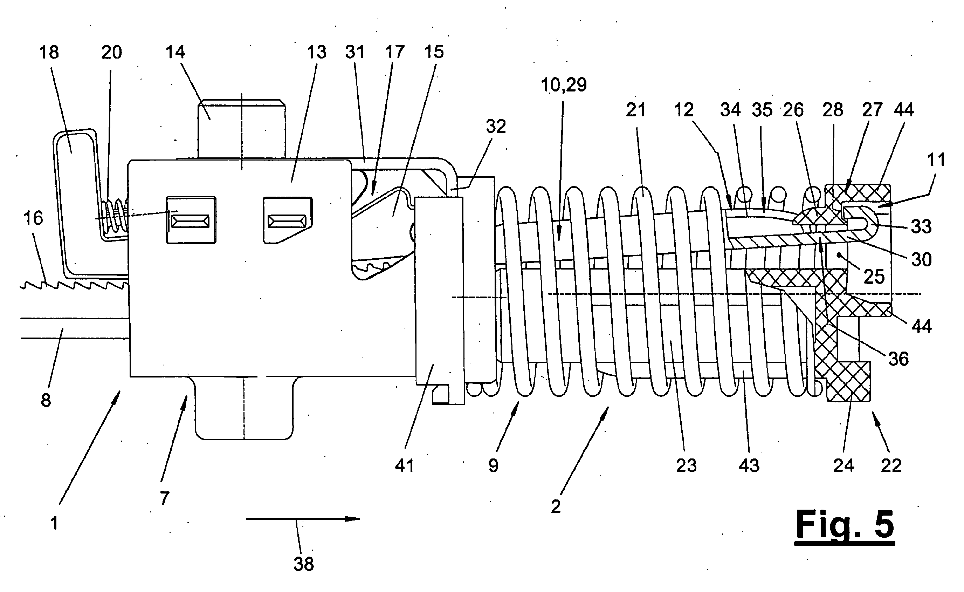

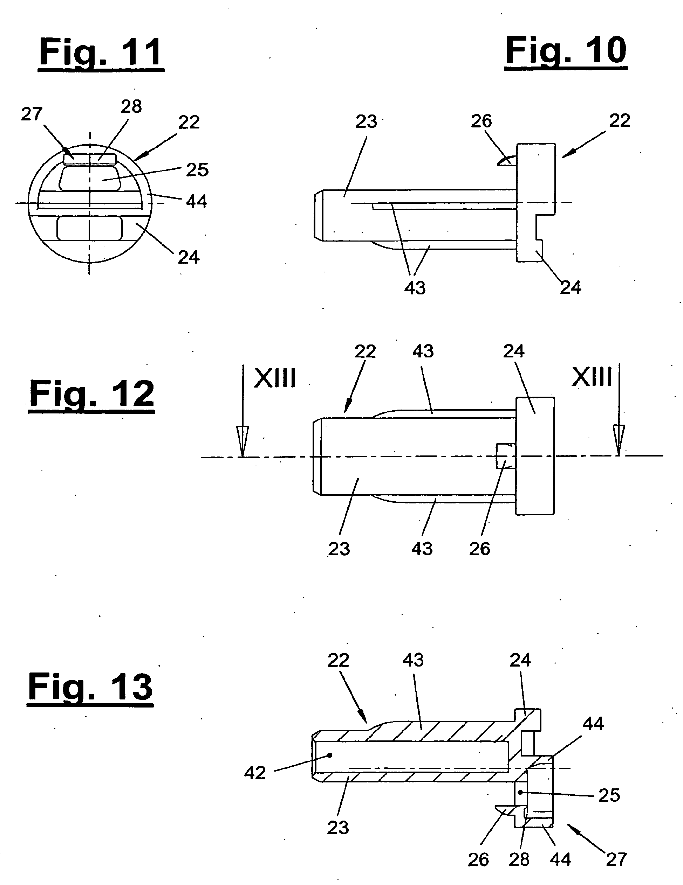

Das Spannelement (9) weist am vorderen Ende eine in Figur 10 bis 13 dargestellte Federabstützung (22) auf, welche einerseits das vordere Ende der Spannfeder (21) abstützt und führt und andererseits mit dem Zugelement (8) kraft - oder formschlüssig verbunden ist und dieses mitnimmt. Hierfür kann die Federabstützung (22) eine schalen- oder zapfenförmige Aufnahme (23) mit einem Hohlraum (42) für das Zugelement (8) besitzen, die sich durch den hohlen Innenraum der Spannfeder (21) erstreckt und an der Oberseite noch einen Freiraum für das Sicherungselement (10) lässt. Figur 5 zeigt diese Anordnung in vergrößerter Anordnung. Die Aufnahme (23) kann gemäß Figur 10 bis 13 auch längslaufende seitliche Führungsrippen (43) für die Spannfeder (21) besitzen.

Die Federabstützung (22) weist ferner ein frontseitiges Stützelement (24) auf, welches z.B. als kreisrunde Stützplatte ausgebildet ist. Diese besitzt an der Rückseite Führungsansätze oder dergleichen zur Abstützung und Führung der anliegenden Spannfeder (21). Hier ist außerdem eine zum Klemmgehäuse (13) hin ragende Leitzunge r (26) angeordnet, die z.B. als angeformter Ansatz ausgebildet ist und mit der Leiteinrichtung (12) und dem Sicherungselement (10) zusammenwirkt. Die Leitzunge (26) kann außerdem zur Federführung dienen. Die Federabstützung (22) kann ein Form- oder Gussteil aus Metall sein.

Das Stützelement (24) besitzt außerdem eine Durchgangsöffnung (25), durch welche sich das Sicherungselement (10) erstrecken und bewegen kann. Das Stützelement (24) hat an der Außenseite und in Nachbarschaft zur Öffnung (25) eine Halterung (27) für das Sicherungselement (10), die zur Bildung der Arretierung oder der Schnappverbindung (11) dient. Wie Figur 5 und 13 im Schnitt verdeutlichen, kann die Halterung (27) als stirnseitige Rastnut (28) ausgebildet sein, die ggf. eine zur Öffnung (25) benachbarte schräge Nutenwand zum leichteren Ausrasten und Öffnen der Schnappverbindung (11) aufweise kann. Das Stützelement (24) kann außerdem rund um die Öffnung (25) topfartig nach vorn vorstehende Wände (44) haben, welche die Halterung (27) und die Öffnung (25) sowie das Sicherungselement (10) schützend umgeben und ein vorzeitiges Öffnen der herstellerseitig geschlossenen Arretierung oder Schnappverbindung (11) durch äußere Einflüsse verhindern.

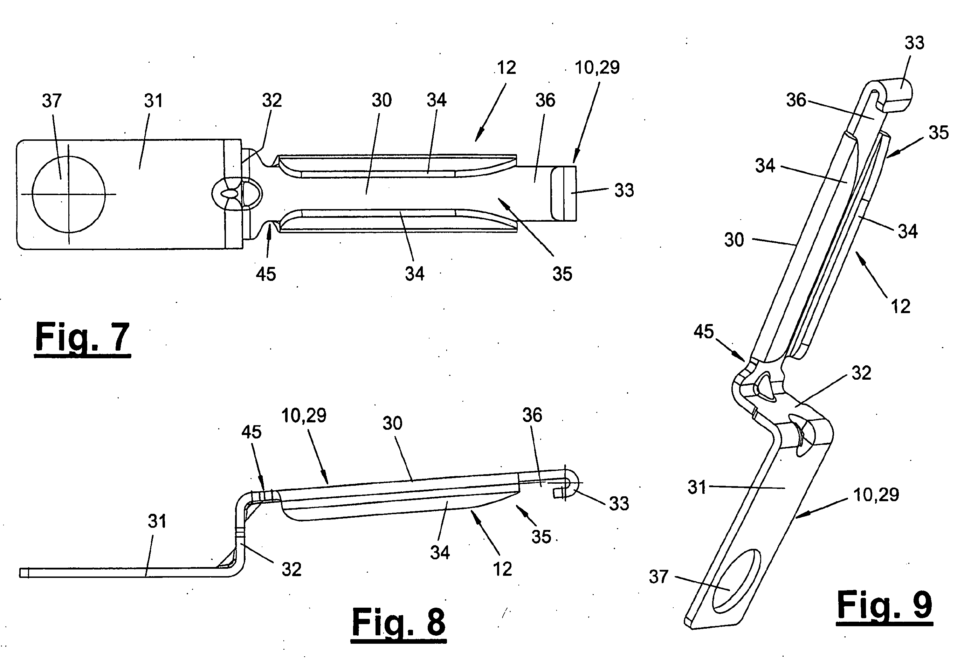

Im gezeigten Ausführungsbeispiel ist das Sicherungselement (10) als abgewinkelter biegeelastischer und geradschenkliger Sicherungsbügel (29) aus einem geeigneten Material, z.B. Metall oder Kunststoff, ausgebildet und in Figur 7 bis 9 perspektivisch und in geklappten Ansichten dargestellt.

Der Sicherungsbügel (29) besitzt einen hinteren Schenkel (31), der mittels einer Gehäuseaufnahme (37) mit dem Klemmgehäuse (13) verbunden werden kann. Die Gehäuseaufnahme (37) kann z.B. eine kreisrunde Lageaufnahme oder Durchgangsöffnung sein, mit dem der Schenkel (31) auf einen Lagerzapfen (14) aufgesteckt werden kann und dabei plan an der Seitenwand des Gehäuses (13) anliegt.

Der Sicherungsbügel (29) weist einen quer abstehenden Zwischenschenkel (32) auf, welcher an der Vorderwand des Klemmgehäuses (13) anliegen kann und sich ggf. durch den Freiraum der Federaufnahme (41) erstreckt. Er wird von der Spannfeder (21) über die Federaufnahme (41) an die Gehäusewand angepresst und fixiert. Der hintere Schenkel (31) und der Zwischenschenkel (32) können eine flache Streifen- oder Plattenform haben.

Der zweifach und etwa Z-förmig abgewinkelte Sicherungsbügel (29) weist außerdem einen geraden vorderen Schenkel (30) auf, der rückseitig an den Zwischenschenkel (32) anschließt. An der Biege- und Übergangsstelle kann eine beidseitige Taillierung (45) vorhanden sein. Der Schenkel (30) erstreckt sich durch den Innenraum der Spannfeder (21) und trägt am vorderen Ende eine hakenförmig gekrümmte und von der Aufnahme (23) wegweisende Sicherungsnase (33), die mit der Halterung (27) bzw. der Rastnut (28) in Eingriff treten kann.

In der Arretierstellung gemäß Figur 2 und 5 ist der vordere Schenkel (30) schräg nach oben gebogen und entwickelt hierdurch nach Lösen der Schnappverbindung (11) eine rückstellende Federkraft. Durch die Lagefixierung des Zwischenschenkels (32) und der Biegestelle zum Schenkel (30) am Klemmgehäuse (13) ist die Federwirkung definiert. In der ungespannten Ausgangsform gemäß Figur 8 kann der Schenkel (30) eine federkraftverstärkende leichte Abwinklung in Gegenrichtung haben.

Am vorderen Schenkel (30) ist außerdem die Leiteinrichtung (12),angeordnet. Sie besteht z.B. aus ein oder zwei seitlichen und vom ebenen Schenkelsteg abstehenden Bügelwänden oder Schenkelwänden (34), die einerseits schräg zur Schenkelmitte hin abgewinkelt sind und am vorderen Ende eine weitere Anschrägung aufweisen. Die Bügelwände (34) stabilisieren den vorderen Schenkel (30) gegen die beim Lösen der Arretierung auftretenden Druckkräfte sowie gegen Knicken und unterstützen die Federwirkung. Die Sicherungsnase (33) und die Leiteinrichtung (12) befinden sich auf der gleichen Seite des Sicherungsbügels (29), wobei die Höhe der Bügelwände (34) gleich oder größer als der zurück gebogenen Sicherungsnase (33) sein kann. Die Bügelwände (34) können bei evtl. Fehlstellungen des Schenkels (30) an der Spannfeder (21) angleiten und ein Einhaken der Sicherungsnase (33) an den Federwindungen verhindern. Die Sicherungsnase (33) kann frontseitig abgerundete oder keilförmig sich verjüngende Seitenränder haben, die ebenfalls ein unerwünschtes Einhaken verhindern und andererseits das Öffnen der Schnappverbindung (11) erleichtern.

Die Bügelwände (34) können ferner eine trichterartig verengte Anlaufschräge (35) an der Vorderseite bilden, die mit dem Ansatz oder der Leitzunge (26) am Stützelement (24) zusammenwirkt. Die Sicherungsnase (33) ist dabei unter Bildung eines Freiraums (36) mit Abstand vor dem Ende der Bügelwände (34) angeordnet. In diesen Freiraum (36) ragt die Leitzunge (26).

Wie Figur 5 verdeutlicht, ragt in der Arretierstellung der vordere Schenkel (30) durch die Öffnung (25), wobei die um 180° zurückgebogene Sicherungsnase (33) in die Rastnut (28) eingreift und ein Entspannen der vorgespannten Spannfeder (2) verhindert. Wenn aus dieser Arretierstellung heraus das Betätigungsorgan (4) noch weiter bewegt und dadurch die Mitnahmeeinrichtung (7) mit dem Sicherungsbügel (29) in Auszugsrichtung (38) weiterbewegt wird, gelangt die Sicherungsnase (33) aus der Rastnut (28), wobei der vordere Schenkel (30) aus der gespannten Schräglage in die längsgerichtete neutrale Stellung zurückfedert. Der Schenkel (30) schwebt in der Neutrallage mit seiner ebenen Unterseite über der Aufnahme (23) oder liegt hier nur mit minimaler Kraft an. Der Sicherungsbügel (29) bremst bzw. reduziert dadurch nicht die Kraft des Spannelements (9) bei der Verschleißkompensation.

Die Rückbewegung des Schenkels (30) kann durch die Leiteinrichtung (12) unterstützt werden, wobei die Anlaufschräge (35) an der Leitzunge bei der Relativbewegung zwischen dem Sicherungsbügel (29) und dem vom Zugelement (8) festgehaltenen Stützelement (24) angleitet und den Schenkel (30) wegdrückt.

Bei Einnahme der Ruhe- und Anschlagstellung des Betätigungsorgans (4) und der Mitnahmeeinrichtung (7) und bei gelöstem Rastgesperre (16) kann die Spannfeder (21) sich unter Mitnahme des Zugelements (8) entspannen. Hierbei schiebt sie das Stützelement (24) in Auszugsrichtung (38) über den in Neutralstellung befindlichen Sicherungsbügel (29) hinweg, wobei das vordere Bügelende mit der Sicherungsnase (33) durch die Öffnung (25) taucht und in den Spannfederbereich gelangt. Der vordere Schenkel (30) kann in der Neutralstellung auf dem unprofilierten Vorderende des Zugelements (8) gleitend aufliegen und behindert nicht die Kompensationsbewegungen der Spannfeder (21) und des Zugelements (8). Die gleitgünstig gebogene Sicherungsnase (33) kann durch die ebene und mit dem Öffnungsrand fluchtende Unterseite der Leitzunge (26) in der Neutralstellung gehalten werden.

Abwandlungen der gezeigten und beschriebenen Ausführungsformen sind in verschiedener Weise möglich. Die Mitnahmeeinrichtung (7) kann in anderer Weise ausgebildet sein, wobei z.B. die Zugstange (8) eine zylindrische Form mit einem außenseitigen Wellenprofil hat und das Klemmstück (15) aus mehreren rund um die Zugstange (8) keilförmigen Ringsegmenten mit einem innenseitigen Wellengegenprofil besteht. Ferner kann das Spannelement (9) an anderer Stelle der Seilzugeinstellung (1) angeordnet und in anderer Weise ausgebildet sein. Gleiches gilt für das Sicherungselement (10). Statt der schrägen Bügelwände (34) kann ein hochragender Mittelsteg vorhanden sein. Auch die Sperrnase (33) kann eine andere Form und Anordnung haben.

### BEZUGSZEICHENLISTE

- 1: Seilzugeinstellung
- 2: Montagehilfe
- 3: Bremseinrichtung, Feststellbremse
- 4: Betätigungsorgan
- 5: Seilzug, Bremszug
- 6: Ausgleichselement, Waagbalken
- 7: Mitnahmeeinrichtung
- 8: Zugelement, Zugstange
- 9: Spannelement
- 10: Sicherungselement
- 11: Schnappverbindung
- 12: Leiteinrichtung
- 13: Klemmgehäuse
- 14: Lager
- 15: Klemmstück
- 16: Rastgesperre, Verzahnung
- 17: Keilführung
- 18: Ansatz
- 19: Anschlag
- 20: Feder
- 21: Spannfeder
- 22: Federabstützung
- 23: Aufnahme für Zugelement
- 24: Stützelement, Stützplatte
- 25: Öffnung
- 26: Ansatz, Leitzunge
- 27: Halterung für Sicherungselement
- 28: Rastnut
- 29: Sicherungsbügel
- 30: Schenkel vorn
- 31: Schenkel hinten
- 32: Zwischenschenkel
- 33: Sicherungsnase
- 34: Bügelwand, Schenkelwand
- 35: Anlaufschräge
- 36: Freiraum
- 37: Gehäuseaufnahme, Lageraufnahme
- 38: Anzugrichtung
- 39: Verbindungsstange
- 40: Gelenk
- 41: Federaufnahme
- 42: Hohlraum
- 43: Führungsrippe
- 44: Wand
- 45: Taillierung
- 46: Verbindungsstelle zu Betätigungsorgan
- 47: Verbindungsstelle zu Seilzug

## Patentansprüche

1. Montagehilfe für eine Seilzugeinstellung (1), welche ein mit mindestens einem Seilzug (5) verbindbares Zugelement (8) und eine mit einem Betätigungsorgan (4) der Bremseinrichtung (3) verbindbare Mitnahmeeinrichtung (7) für die lösbare Mitnahme des Zugelements (8) sowie ein zwischen der Mitnahmeeinrichtung (7) und dem Zugelement (8) wirkendes Spannelement (9) aufweist, **dadurch gekennzeichnet, dass** die Montagehilfe (2) ein Sicherungselement (10) aufweist, welches das Spannelement (9) in einer teilweise gespannten Stellung arretiert und durch eine Bewegung des Betätigungsorgans (4) und/oder des Zugelements (8) selbsttätig freigibt.

2. Montagehilfe nach Anspruch 1, **dadurch gekennzeichnet, dass** die Montagehilfe (2) eine vorgespannte Schnappverbindung (11) zwischen dem Sicherungselement (10) und dem Spannelement (9) aufweist, wobei die Schnappverbindung (11) durch eine Relativbewegung zwischen dem Sicherungselement (10) und dem Spannelement (9) lösbar ist.

3. Montagehilfe nach Anspruch 1 oder 2, **dadurch gekennzeichnet, dass** die Montagehilfe (2) eine Leiteinrichtung (12) zum Führen des Sicherungselements (10) beim Lösen der Schnappverbindung (11) aufweist, wobei die Leiteinrichtung (12) als Sicherung gegen ein erneutes Einrasten der Arretierung oder der Schnappverbindung (11) ausgebildet ist.

4. Montagehilfe nach Anspruch 1, 2 oder 3, **dadurch gekennzeichnet, dass** das Sicherungselement (10) mit der Mitnahmeeinrichtung (7) und/oder dem Betätigungsorgan (4) verbunden und zumindest bereichsweise biegeelastisch ausgebildet ist.

5. Montagehilfe nach einem der vorhergehenden Ansprüche, **dadurch gekennzeichnet, dass** das Sicherungselement (10) eine gekrümmte Sicherungsnase (33) zum lösbaren Eingriff mit einer Halterung (27) des Spannelements (9) aufweist, wobei die Sicherungsnase (33) und die Leiteinrichtung (12) auf der gleichen Seite des Sicherungsbügels (29) angeordnet sind.

6. Montagehilfe nach einem der vorhergehenden Ansprüche, **dadurch gekennzeichnet, dass** der Sicherungsbügel (29) das hohle Spannelement (9) in gespannter Lage durchsetzt und außenseitig an der nutförmigen Halterung (27) des Spannelements (9) angreift.

7. Seilzugeinstellung, welche ein mindestens einem Seilzug (5) verbindbares Zugelement (8) und eine mit einem Betätigungsorgan (4) verbindbare Mitnahmeeinrichtung (7) für die lösbare Mitnahme des Zugelements (8) sowie ein zwischen der Mitnahmeeinrichtung (7) und dem Zugelement (8) wirkendes Spannelement (9) sowie eine Montagehilfe (2) aufweist, **dadurch gekennzeichnet, dass** die Montagehilfe (2) ein Sicherungselement (10) aufweist, welches das Spannelement (9) in einer teilweise gespannten Stellung arretiert und durch eine Bewegung des Betätigungsorgans (4) und/oder des Zugelements (8) selbsttätig freigibt.

8. Seilzugeinstellung nach Anspruch 7, **dadurch gekennzeichnet, dass** die Mitnahmeeinrichtung (7) ein Klemmgehäuse (13) mit einem darin beweglich geführten Klemmstück (15) mit einer Keilführung (17) aufweist, wobei das Zugelement (8) das Klemmgehäuse (13) durchsetzt und mit dem Klemmstück (15) über ein lösbares Rastgesperre (16) zusammenwirkt.

9. Seilzugeinstellung nach Anspruch 7 oder 8, **dadurch gekennzeichnet, dass** die Montagehilfe (2) nach einem der Ansprüche 2 bis 6 ausgebildet ist.

10. Seilzugeinstellung nach einem der Ansprüche 7 bis 9, **dadurch gekennzeichnet, dass** das Spannelement (9) eine an der Mitnahmeeinrichtung (7) abstützbare hohle Spannfeder (21) und eine Aufnahme (23) für das Zugelement (8) aufweist, wobei das Spannelement (9) ein Stützelement (24) für die Spannfeder (21) aufweist, welches eine Öffnung (25) für den Durchtritt des Sicherungselements (10) und eine außenseitige Rastnut (28) zur Aufnahme der Sicherungsnase (33) aufweist.

11. Seilzugeinstellung nach einem der Ansprüche 7 bis 10, **dadurch gekennzeichnet, dass** das Stützelement (24) eine mit der Leiteinrichtung (12) bei einer Relativbewegung zusammenwirkende Leitzunge (26) zum Lösen der Arretierung oder der Schnappverbindung (11) und zur Sicherung gegen deren erneutes Einrasten aufweist.

12. Bremseinrichtung (3) mit ein oder mehreren Seilzügen (5), einem Betätigungsorgan (4) und einer Seilzugeinstellung (1), welche ein mit mindestens einem Seilzug (5) verbundenes Zugelement (8) und eine mit dem Betätigungsorgan (4) verbundene Mitnahmeeinrichtung (7) für die lösbare Mitnahme des Zugelements (8) sowie ein zwischen der Mitnahmeeinrichtung (7) und dem Zugelement (8) wirkendes Spannelement (9) und eine Montagehilfe (2) aufweist, **dadurch gekennzeichnet, dass** die Montagehilfe (2) ein Sicherungselement (10) aufweist, welches das Spannelement (9) in einer teilweise gespannten Stellung arretiert und durch eine Bewegung des Betätigungsorgans (4) und/oder des Zugelements (8) selbsttätig freigibt.

13. Bremseinrichtung nach Anspruch 12, **dadurch gekennzeichnet, dass** die Seilzugeinstellung (1) nach einem der Ansprüche 7 bis 11 ausgebildet ist.

14. Verfahren zum Montieren einer Seilzugeinstellung (1), welche ein mit mindestens einem Seilzug (5) verbindbares Zugelement (8) und eine mit einem Betätigungsorgan (4) der Bremseinrichtung (3) verbindbare Mitnahmeeinrichtung (7) für die lösbare Mitnahme des Zugelements (8) sowie ein zwischen der Mitnahmeeinrichtung (7) und dem Zugelement (8) wirkendes Spannelement (9) aufweist, wobei mit einer Montagehilfe (2) die Seilzugeinstellung temporär überbrückt oder entlastet wird, **dadurch gekennzeichnet, dass** mit einem Sicherungselement (10) der Montagehilfe (2) das Spannelement (9) in einer teilweise gespannten Stellung arretiert und durch eine Bewegung des Betätigungsorgans (4) und/oder des Zugelements (8) selbsttätig freigegeben wird.

15. Verfahren nach Anspruch 14, **dadurch gekennzeichnet, dass** das Spannelement (9) mit einer Schnappverbindung (11) arretiert wird, wobei mit einer Leiteinrichtung das Öffnen der Schnappverbindung (11) unterstützt und ein erneutes selbsttätiges Einrasten der Schnappverbindung (11) im weiteren Betrieb unterbunden wird.

## Claims

1. Mounting aid for a cable assembly setting system (1), which has a pull element (8) connectable to at least one cable assembly (5) and a driving device (7), connectable to an actuating member (4) of the braking device (3), for the releasable drive of the pull element (8), and also a tension element (9) acting between the driving device (7) and the pull element (8), **characterized in that** the mounting aid (2) has a securing element (10) which detains the tension element (9) in a partially tensioned position and which automatically releases the said tension element as a result of movement of the actuating member (4) and/or the pull element (8).

2. Mounting aid according to Claim 1, **characterized in that** the mounting aid (2) has a prestressed snap connection (11) between the securing element (10) and the tension element (9), the snap connection (11) being releasable by means of relative movement between the securing element (10) and the tension element (9).

3. Mounting aid according to Claim 1 or 2, **characterized in that** the mounting aid (2) has a lead device (12) for guiding the securing element (10) during the release of the snap connection (11), the lead device (12) being designed as a safeguard against renewed latching of the detention or of the snap connection (11).

4. Mounting aid according to Claim 1, 2 or 3, **characterized in that** the securing element (10) is connected to the driving device (7) and/or to the actuating member (4) and is designed at least in regions to be flexurally elastic.

5. Mounting aid according to one of the preceding claims, **characterized in that** the securing element (10) has a curved securing nose (33) for releasable engagement with a holding device (27) of the tension element (9), the securing nose (33) and the lead device (12) being arranged on the same side of the securing shackle (29).

6. Mounting aid according to one of the preceding claims, **characterized in that** the securing shackle (29) passes through the hollow tension element (9) in the tensioned position and engages on the outside on the groove-shaped holding device (27) of the tension element (9).

7. Cable assembly setting system, which has a pull element (8) connectable to at least one cable assembly (5) and a driving device (7), connectable to an actuating member (4), for the releasable drive of the pull element (8), and also a tension element (9) acting between the driving device (7) and the pull element (8), and a mounting aid (2), **characterized in that** the mounting aid (2) has a securing element (10) which detains the tension element (9) in a partially tensioned position and which automatically releases the said tension element as a result of movement of the actuating member (4) and/or the pull element (8).

8. Cable assembly setting system according to Claim 7, **characterized in that** the driving device (7) has a clamping housing (13) with a clamping piece (15) guided moveably therein and having a V-guide (17), the pull element (8) passing through the clamping housing (13) and cooperating with the clamping piece (15) via a releasable ratchet mechanism (16).

9. Cable assembly setting system according to Claim 7 or 8, **characterized in that** the mounting aid (2) is designed according to one of Claims 2 to 6.

10. Cable assembly setting system according to one of Claims 7 to 9, **characterized in that** the tension element (9) has a hollow tension spring (21) supportable on the driving device (7) and a receptacle (23) for the pull element (8), the tension element (9) having a supporting element (24) for the tension spring (21), which supporting element has an orifice (25) for the passage of the securing element (10) and an outer latching groove (28) for receiving the securing nose (33).

11. Cable assembly setting system according to one of Claims 7 to 10, **characterized in that** the supporting element (24) has a lead tongue (26), cooperating with the lead device (12) during relative movement, for releasing the detention or snap connection (11) and for safeguarding against the renewed latching of the latter.

12. Braking device (3) with one or more cable assemblies (5), with an actuating member (4) and with a cable assembly setting system (1) which has a pull element (8) connected to at least one cable assembly (5) and a driving device (7), connected to the actuating member (4), for the releasable drive of the pull element (8), and also a tension element (9) acting between the driving device (7) and the pull element (8), and a mounting aid (2), **characterized in that** the mounting aid (2) has a securing element (10) which detains the tension element (9) in a partially tensioned position and which automatically releases the said tension element as a result of movement of the actuating member (4) and/or the pull element (8).

13. Braking device according to Claim 12, **characterized in that** the cable assembly setting system (1) is designed according to one of Claims 7 to 11.

14. Method for mounting a cable assembly setting system (1) which has a pull element (8) connectable to at least one cable assembly (5) and a driving device (7), connectable to an actuating member (4) of the braking device (3), for the releasable drive of the pull element (8), and also a tension element (9) acting between the driving device (7) and the pull element (8), the cable assembly setting system being temporarily bridged or relieved by means of a mounting aid (2), **characterized in that**, by means of a securing element (10) of the mounting aid (2), the tension element (9) is detained in a partially tensioned position and is released automatically as a result of movement of the actuating member (4) and/or of the tension element (8).

15. Method according to Claim 14, **characterized in that** the tension element (9) is detained by means of a snap connection (11), by means of a lead device the opening of the snap connection (11) being assisted and renewed automatic latching of the snap connection (11) during further operation being prevented.

## Revendications

1. Auxiliaire de montage pour un dispositif de réglage de câble Bowden (1) qui comprend un élément de traction (8) qui peut être relié à au moins un câble Bowden (5) et un dispositif d'entraînement (7) qui peut être relié à un organe d'actionnement (4) du dispositif de freinage (3) pour l'entraînement libérable de l'élément de traction (8), ainsi qu'un élément tendeur (9) agissant entre le dispositif d'entraînement (7) et l'élément de traction (8), **caractérisé en ce que** l'auxiliaire de montage (2) comprend un élément de fixation (10) qui bloque l'élément tendeur (9) dans une position partiellement tendue et le libère automatiquement par un déplacement de l'organe d'actionnement (4) et/ou de l'élément de traction (8).

2. Auxiliaire de montage selon la revendication 1, **caractérisé en ce que** l'auxiliaire de montage (2) comprend une liaison par encliquetage (11) précontrainte entre l'élément de fixation (10) et l'élément tendeur (9), la liaison par encliquetage (11) pouvant être libérée par un déplacement relatif entre l'élément de fixation (10) et l'élément tendeur (9).

3. Auxiliaire de montage selon la revendication 1 ou 2, **caractérisé en ce que** l'auxiliaire de montage (2) comprend un dispositif de guidage (12) pour guider l'élément de fixation (10) lors de la libération de la liaison par encliquetage (11), le dispositif de guidage (12) étant réalisé en tant que protection contre un renouvellement de l'encliquetage du blocage ou de la liaison par encliquetage (11).

4. Auxiliaire de montage selon la revendication 1, 2 ou 3, **caractérisé en ce que** l'élément de fixation (10) est relié au dispositif d'entraînement (7) et/ou à l'organe d'actionnement (4) et est réalisé de manière élastique en flexion au moins par endroits.

5. Auxiliaire de montage selon l'une quelconque des revendications précédentes, **caractérisé en ce que** l'élément de fixation (10) comprend un ergot de fixation courbé (33) pour l'engagement libérable avec un élément de retenue (27) de l'élément tendeur (9), l'ergot de fixation (33) et le dispositif de guidage (12) étant disposés du même côté de l'étrier de fixation (29).

6. Auxiliaire de montage selon l'une quelconque des revendications précédentes, **caractérisé en ce que** l'étrier de fixation (29) traverse l'élément tendeur creux (9) dans l'état tendu et s'engage sur le côté extérieur avec l'élément de retenue (27) en forme de rainure de l'élément tendeur (9).

7. Dispositif de réglage de câble Bowden qui comprend un élément de traction (8) qui peut être relié à au moins un câble Bowden (5) et un dispositif d'entraînement (7) qui peut être relié à un organe d'actionnement (4) pour l'entraînement libérable de l'élément de traction (8), ainsi qu'un élément tendeur (9) agissant entre le dispositif d'entraînement (7) et l'élément de traction (8), et un auxiliaire de montage (2), **caractérisé en ce que** l'auxiliaire de montage (2) comprend un élément de fixation (10) qui bloque l'élément tendeur (9) dans une position partiellement tendue et le libère automatiquement par un déplacement de l'organe d'actionnement (4) et/ou de l'élément de traction (8).

8. Dispositif de réglage de câble Bowden selon la revendication 7, **caractérisé en ce que** le dispositif d'entraînement (7) comprend un boîtier de serrage (13) doté d'une pièce de serrage (15) guidée de manière mobile dans celui-ci et comprenant un guidage à coin (17), l'élément de traction (8) traversant le boîtier de serrage (13) et coopérant avec la pièce de serrage (15) par l'intermédiaire d'un dispositif de blocage par encliquetage (16) libérable.

9. Dispositif de réglage de câble Bowden selon la revendication 7 ou 8, **caractérisé en ce que** l'auxiliaire de montage (2) est réalisé selon l'une des revendications 2 à 6.

10. Dispositif de réglage de câble Bowden selon l'une quelconque des revendications 7 à 9, **caractérisé en ce que** l'élément tendeur (9) comprend un ressort tendeur creux (21) pouvant s'appuyer contre le dispositif d'entraînement (7) ainsi qu'un logement (23) pour l'élément de traction (8), l'élément tendeur (9) comprenant un élément d'appui (24) pour le ressort tendeur (21), lequel élément d'appui comprend une ouverture (25) pour le passage de l'élément de fixation (10) et une rainure d'encliquetage (28) située sur le côté extérieur pour recevoir l'ergot de fixation (33).

11. Dispositif de réglage de câble Bowden selon l'une quelconque des revendications 7 à 10, **caractérisé en ce que** l'élément d'appui (24) comprend une languette de guidage (26) coopérant avec le dispositif de guidage (12) lors d'un déplacement relatif pour libérer le blocage ou la liaison par encliquetage (11) et pour la protection contre le renouvellement de leur encliquetage.

12. Dispositif de freinage (3) comprenant un ou plusieurs câbles Bowden (5), un organe d'actionnement (4) et un dispositif de réglage de câble Bowden (1) qui comprend un élément de traction (8) relié à au moins un câble Bowden (5) et un dispositif d'entraînement (7) relié à l'organe d'actionnement (4) pour l'entraînement libérable de l'élément de traction (8), ainsi qu'un élément tendeur (9) agissant entre le dispositif d'entraînement (7) et l'élément de traction (8), et un auxiliaire de montage (2), **caractérisé en ce que** l'auxiliaire de montage (2) comprend un élément de fixation (10) qui bloque l'élément tendeur (9) dans une position partiellement tendue et le libère automatiquement par un déplacement de l'organe d'actionnement (4) et/ou de l'élément de traction (8).

13. Dispositif de freinage selon la revendication 12, **caractérisé en ce que** le dispositif de réglage de câble Bowden (1) est réalisé selon l'une des revendications 7 à 11.

14. Procédé de montage d'un dispositif de réglage de câble Bowden (1) qui comprend un élément de traction (8) qui peut être relié à au moins un câble Bowden (5) et un dispositif d'entraînement (7) qui peut être relié à un organe d'actionnement (4) du dispositif de freinage (3) pour l'entraînement libérable de l'élément de traction (8), ainsi qu'un élément tendeur (9) agissant entre le dispositif d'entraînement (7) et l'élément de traction (8), le dispositif de réglage de câble Bowden étant surmonté ou détendu temporairement par un auxiliaire de montage (2), **caractérisé en ce que** l'élément tendeur (9) est bloqué dans une position partiellement tendue à l'aide d'un élément de fixation (10) de l'auxiliaire de montage (2) et est libéré automatiquement par un déplacement de l'organe d'actionnement (4) et/ou de l'élément de traction (8).

15. Procédé selon la revendication 14, **caractérisé en ce que** l'élément tendeur (9) est bloqué à l'aide d'une liaison par encliquetage (11), l'ouverture de la liaison par encliquetage (11) étant assistée par un dispositif de guidage et un renouvellement automatique de l'encliquetage de la liaison par encliquetage (11) étant empêché pendant le fonctionnement ultérieur.
